# EUROPEAN PATENT APPLICATION

(11) **EP 3 483 586 A1**
(43) Date of publication of application: **15.05.2019**
(21) Application number: 16908018.1
(22) Date of filing: 04.11.2016
(51) Int. Cl.: G01N 15/06

(54) **PM2.5 MEASUREMENT DEVICE**

(30) Priority: 06.07.2016 CN 201610532185
(71) Applicant: Dongguan Lifa Air Technology Limited, Dongguan City, Guangdong 523808 (CN)
(72) Inventor: ZHANG, Wendong, Dongguan Guangdong 523808 (CN)
(74) Representative: Stellbrink & Partner Patentanwälte mbB
(86) International application number: PCT/CN2016/104526
(87) International publication number: WO 2018/006514

(57) **Abstract**

A PM2.5 measurement device, addressing the technical problem of low measurement accuracy, in which a conventional light scattering sensor in damp air obtains erroneous PM2.5 measurements because water droplets in the air are finer than 2.5 micrometers. The PM2.5 measurement device comprises: a housing (1), a light scattering sensor (2), and an electrical heating unit. The light scattering sensor (2) is disposed within the housing (1), and has an air inlet (21). The electrical heating unit is disposed between an air inlet of the housing and the air inlet (21) of the light scattering sensor (2).

## Description

This application claims priority to Chinese Patent Application No.201610532185.X, titled "PM2.5 MEASUREMENT DEVICE", and filed with the Chinese Patent Office on July 6, 2016, which is incorporated herein by reference in its entirety.

### FIELD

The present disclosure relates to the technical field of air quality measurement, and particularly to a PM2.5 measurement device.

### BACKGROUND

The PM2.5 air quality measurement refers to measurement of a PM2.5 (fine particulate matter) value of the air, which is applied to detection of environment of public places, an atmosphere environment and indoor air, and is also applied to evaluation and analysis of purifying efficiency of an air purifier.

Normally, a PM2.5 sensor is used in an existing PM2.5 air quality measurement method. The PM2.5 sensor is based on a light scattering sensor developed according to the light scattering principle. A light scattering phenomenon is generated by particles and molecules under light irradiation, and the particles and the molecules absorb a part of energy of irradiation light. In a case that a beam of parallel monochromatic light is incident to a measured particle field, the light is attenuated due to scattering and absorbing by the particles. A relative attenuation ratio of the incident light which passes the to-be-measured concentration field is acquired. A relative concentration of dust in the to-be-measured field is substantially linear to the relative attenuation ratio. A light intensity is directly proportional to the magnitude of an electrical signal obtained by photoelectric conversion. Therefore, the relative attenuation ratio can be obtained by measuring the electrical signal, and further the concentration of dust in the to-be-measured field can be measured.

The existing PM2.5 sensor based on the light scattering sensor includes an infrared dust sensor and a laser sensor.

The infrared dust sensor has a simple structure and circuit. A light source of the infrared dust sensor is an infrared LED light source. A resistor generates heat at an air inlet and an air outlet to obtain a hot air flow, and a high level is outputted in a case that particles pass the infrared dust sensor.

The laser sensor has a complex structure and circuit. A light source of the laser sensor is a laser diode. Sampled air is propelled by a fan or an air blower, to pass a complex air channel to be measured. In a case that fine particles in the air enter a region of a laser beam, the laser is scattered. The scattered light irradiates over 360 degrees. A photodetector is arranged at a suitable position to receive only the scattered light. A current signal is generated under a photoelectric effect of the photodetector, and the current signal is amplified and processed by a circuit to obtain a concentration of the fine particles.

However, in a case that the above light scattering sensor measures a PM2.5 value of humid air, the light scattering sensor may make erroneous measurement due to water droplets finer than 2.5µm in the air, which results in a technical problem of low measurement accuracy.

### SUMMARY

A PM2.5 measurement device is provided according to an embodiment of the present disclosure, to solve the technical problem of low measurement accuracy caused by erroneous measurement of the light scattering sensor due to water droplets finer than 2.5µm in humid air in a case that the existing light scattering sensor measures a PM2.5 value of the humid air.

The PM2.5 measurement device provided according to an embodiment of the present disclosure includes a housing, a light scattering sensor and an electrical heating unit. The light scattering sensor is arranged in the housing and has an inlet. The electrical heating unit is arranged between an inlet of the housing and the inlet of the light scattering sensor.

Optionally, a base is arranged in the housing, and the light scattering sensor is mounted on the base. The base is provided with a vent, and the vent corresponds to the inlet of the light scattering sensor.

Optionally, the electrical heating unit is arranged to cover the vent of the base.

Optionally, the electrical heating unit has an area greater than or equal to that of the vent of the base.

Optionally, the electrical heating unit is a PTC heater.

Optionally, the PTC heater is provided with multiple holes, and a diameter of each of the multiple holes is not less than 2.5µm.

Optionally, a base plate is arranged at the bottom of the housing, and multiple intake holes are arranged at the periphery of the base plate.

Optionally, a primary circuit board is arranged in the housing, and a display screen is arranged at the top of the housing. The primary circuit board is electrically connected with the light scattering sensor and the display screen.

Optionally, the PM2.5 measurement device further includes a battery arranged in the housing.

Optionally, the PM2.5 measurement device further includes a secondary circuit board which is removably plugged in a card slot in the housing, and electrically connected with the light scattering sensor, the electrical heating unit and the battery.

It can be seen from the above technical solution that the embodiment of the present disclosure has the following advantages.

The PM2.5 measurement device according to the embodiment of the present disclosure includes a housing, a light scattering sensor and an electrical heating unit. The light scattering sensor is provided in the housing and has an inlet. The electrical heating unit is arranged between an inlet of the housing and the inlet of the light scattering sensor. In the embodiment, by arranging the electrical heating unit between the inlet of the housing and the inlet of the light scattering sensor, humid air is heated by the electrical heating unit before entering the light scattering sensor, so as to partially or completely evaporate water in the humid air, thereby solving the technical problem of low measurement accuracy caused by erroneous measurement of the light scattering sensor due to water droplets finer than 2.5µm in the humid air in a case that the existing light scattering sensor measures a PM2.5 value of the humid air.

### BRIEF DESCRIPTION OF THE DRAWINGS

In order to more clearly illustrate the technical solution in the embodiments of the present disclosure or in the conventional technology, in the following, drawings required in the description of the embodiments or the conventional technology will be introduced simply. Apparently, the drawings in the following description show only some embodiments of the present disclosure. For those skilled in the art, other drawings can also be obtained according to the provided drawings without any creative work.

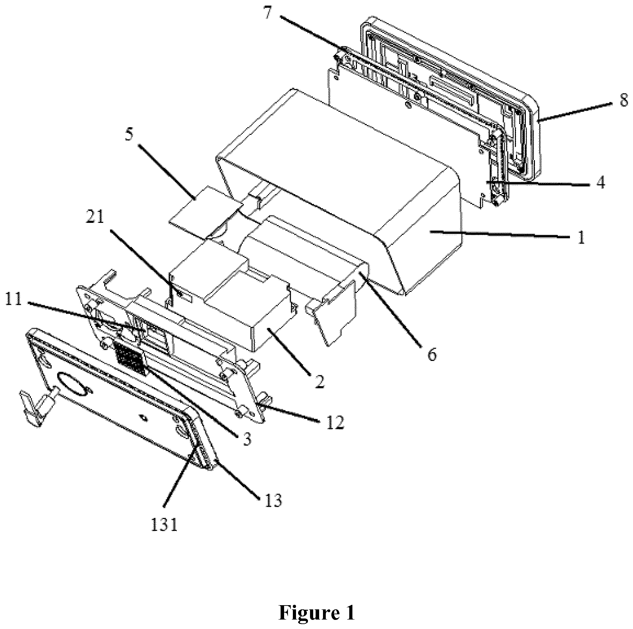

Figure 1 is a schematic structural diagram of a PM2.5 measurement device according to an embodiment of the present disclosure.

### DETAILED DESCRIPTION OF THE EMBODIMENTS

A PM2.5 measurement device according to an embodiment of the present disclosure solves the technical problem of low measurement accuracy caused by erroneous measurement of the light scattering sensor due to water droplets finer than 2.5µm in humid air in a case that the existing light scattering sensor measures a PM2.5 value of the humid air.

Technical solutions in embodiments of the present disclosure are clearly and completely described below in conjunction with drawings in the embodiments of the present disclosure, to make the objective, the features and the advantages of the present disclosure clear and easy to be understood. It is apparent that the embodiments described below are only some embodiments of the present disclosure, rather than all of the embodiments. All other embodiments obtained by those skilled in the art based on the embodiments of the present disclosure without creative efforts fall within the protection scope of the present disclosure.

With reference to Figure 1, a PM2.5 measurement device according to an embodiment of the present disclosure includes a housing 1, a light scattering sensor 2 and an electrical heating unit.

The light scattering sensor 2 is arranged in the housing 1 and has an inlet 21.

The electrical heating unit is arranged between an inlet of the housing and the inlet 21 of the light scattering sensor 2.

Furthermore, a base 12 is arranged in the housing, and the light scattering sensor is mounted on the base 2. The base 12 is provided with a vent 11, and the vent 11 corresponds to the inlet 21 of the light scattering sensor.

Furthermore, the electrical heating unit is arranged to cover the vent 11 of the base 12.

Furthermore, the electrical heating unit has an area greater than or equal to that of the vent 11 of the base 12.

Furthermore, the electrical heating unit is a PTC heater 3.

Furthermore, the PTC heater 3 is provided with multiple holes, and a diameter of each of the multiple holes is not less than 2.5µm.

Furthermore, a base plate 13 is arranged at the bottom of the housing 1, and multiple intake holes 131 are arranged at the periphery of the base plate 13.

Furthermore, a primary circuit board 4 is arranged in the housing 1, and a display screen 8 is arranged at the top of the housing 1. The primary circuit board 4 is electrically connected with the light scattering sensor 2 and the display screen 8.

Furthermore, the PM2.5 measurement device further includes a battery 6 arranged in the housing 1.

Furthermore, the PM2.5 measurement device further includes a secondary circuit board 5 which is removably plugged in a card slot in the housing 1, and electrically connected with the light scattering sensor 2, the electrical heating unit and the battery 6.

The PM2.5 measurement device according to the embodiment further includes a lithium battery 6. A top cover 7 is arranged between the primary circuit board 4 and the touch display screen 8. A power supply jack is arranged at the bottom of the base plate 13. The base 12 and the base plate 13 are secured through a screw. The base 12 is fastened to an aluminum shell of the housing 1.

It can be understood that outside air is sucked in via the intake holes 131 arranged at the periphery of the bottom of the base plate 13 when a fan in the light scattering sensor 2 is rotated, and passes the multiple holes of the PTC heater 3 inserted at the outer edge of the vent 11 of the housing. The water vapor in the outside air is heated and evaporated by the PTC heater 3, and the light scattering sensor 2 acquires and measures the air in which the water vapor is already heated and evaporated.

The PM2.5 measurement device according to the embodiment of the present disclosure includes a housing 1, a light scattering sensor 2 and an electrical heating unit. The light scattering sensor 2 is arranged in the housing 1 and has an inlet 21. The electrical heating unit is arranged between an inlet of the housing and the inlet 21 of the light scattering sensor 2. In the embodiment, by arranging the electrical heating unit between the inlet of the housing and the inlet 21 of the light scattering sensor 2, humid air is heated by the electrical heating unit before entering the light scattering sensor, so as to partially or completely evaporate water in the humid air, thereby solving the technical problem of low measurement accuracy caused by erroneous measurement of the light scattering sensor due to water droplets less than 2.5µm in the humid air in a case that the existing light scattering sensor measures a PM2.5 value of the humid air.

As described above, the above embodiments are only intended to illustrate the technical solution of the present disclosure, rather than to limit technical solution of the present disclosure. Although the technical solution is illustrated in detail with reference to the above embodiments, it should be understood by those skilled in the art that modification may be made to the technical solution recited in the above embodiment, or equivalent substitution can be made to a part of technical features in the technical solution. The modification and the substitution do not make the essence of the technical solution depart from the spirit and scope of the technical solution in the embodiments of the present disclosure.

## Claims

1. A PM2.5 measurement device, comprising:
a housing;
a light scattering sensor; and
an electrical heating unit,
wherein the light scattering sensor is arranged in the housing and has an inlet, and the electrical heating unit is arranged between an inlet of the housing and the inlet of the light scattering sensor.

2. The PM2.5 measurement device according to claim 1, wherein a base is arranged in the housing, and the light scattering sensor is mounted on the base, the base is provided with a vent, and the vent corresponds to the inlet of the light scattering sensor.

3. The PM2.5 measurement device according to claim 2, wherein the electrical heating unit is arranged to cover the vent of the base.

4. The PM2.5 measurement device according to claim 3, wherein the electrical heating unit has an area greater than or equal to that of the vent of the base.

5. The PM2.5 measurement device according to any one of claims 1 to 4, wherein the electrical heating unit is a PTC heater.

6. The PM2.5 measurement device according to claim 5, wherein the PTC heater is provided with a plurality of holes, and a diameter of each of the plurality of holes is not less than 2.5µm.

7. The PM2.5 measurement device according to claim 1, wherein a base plate is arranged at the bottom of the housing, and a plurality of intake holes are arranged at the periphery of the base plate.

8. The PM2.5 measurement device according to claim 1, wherein
a primary circuit board is arranged in the housing, and a display screen is arranged at the top of the housing, and
the primary circuit board is electrically connected with the light scattering sensor and the display screen.

9. The PM2.5 measurement device according to claim 1, further comprising a battery arranged in the housing.

10. The PM2.5 measurement device according to claim 9, further comprising:
a secondary circuit board which is removably plugged in a card slot in the housing, and electrically connected with the light scattering sensor, the electrical heating unit and the battery.
